# EUROPÄISCHE PATENTSCHRIFT

(11) **EP 2 206 025 B1**
(45) Veröffentlichungstag und Bekanntmachung des Hinweises auf die Patenterteilung: **15.05.2013**
(21) Anmeldenummer: 08841305.9
(22) Anmeldetag: 24.10.2008
(51) Int. Cl.: G05B 19/418, H04L 29/06

(54) **VERFAHREN ZUR ORCHESTRIERUNG VON SERVICES EINES SERVICEORIENTIERTEN AUTOMATIONSSYSTEMS**
METHOD FOR ORCHESTRATING SERVICES OF A SERVICE-ORIENTED AUTOMATION SYSTEM
PROCÉDÉ D'ORCHESTRATION DES SERVICES D'UN SYSTÈME D'AUTOMATISATION AXÉ SUR LES SERVICES

(30) Priorität: 26.10.2007 DE 102007051683
(43) Veröffentlichungstag der Anmeldung: 14.07.2010
(73) Patentinhaber: SCHNEIDER ELECTRIC AUTOMATION GMBH, 63500 Seligenstadt (DE)
(72) Erfinder: COLOMBO, Armando Walter, 63791 Karlstein (DE); MENDES, Joao Marco, P-4490-162 Ponte de Lima (PT); LEITAO, Paulo, P-5300-389 Braganca (PT)
(74) Vertreter: Stoffregen, Hans-Herbert
(86) Internationale Anmeldenummer: PCT/EP2008/064470
(87) Internationale Veröffentlichungsnummer: WO 2009/053472

(56) Entgegenhaltungen:
- BEPPERLING A ET AL: "A Framework for Development and Implementation of Web service-Based Intelligent Autonomous Mechatronics Components" INDUSTRIAL INFORMATICS, 2006 IEEE INTERNATIONAL CONFERENCE ON, IEEE, PI, 1. August 2006 (2006-08-01), Seiten 341-347, XP031003375 ISBN: 978-0-7803-9700-2
- PAULO LEITAO ET AL: "Petri net based Methodology for the Development of Collaborative Production Systems" EMERGING TECHNOLOGIES AND FACTORY AUTOMATION, 2006. ETFA '06. IEE E CONFERENCE ON, IEEE, PI, 1. September 2006 (2006-09-01), Seiten 819-826, XP031082669 ISBN: 978-0-7803-9758-3
- FRANCOIS JAMMES: "Service-Oriented Device Communications Using the Device Profile for Web Services" INTERNET CITATION, 2. Dezember 2005 (2005-12-02), XP002509060 [gefunden am 2006-01-01]
- MARCO MENDES J ET AL: "Service-oriented control architecture for reconfigurable production systems" INDUSTRIAL INFORMATICS, 2008. INDIN 2008. 6TH IEEE INTERNATIONAL CONFERENCE ON, IEEE, PISCATAWAY, NJ, USA, 13. Juli 2008 (2008-07-13), Seiten 744-749, XP031316129 ISBN: 978-1-4244-2170-1
- FRANCOIS JAMMES ET AL: "Service-Oriented Device Communications Using the Device Profile for Web Services", INTERNET ARTICLE, [Online] pages 1-8, XP002509060, Retrieved from the Internet: URL:http://middleware05.objectweb.org/WSPr oceedings/MPAC05/a16-jammes.pdf> [retrieved on 2008-12-22]

## Beschreibung

Die Erfindung bezieht sich auf ein Verfahren zur Orchestrierung von Services eines serviceorientierten Automationssystems, wobei Systemkomponenten deren Funktionalität darstellende Services anbieten und Services anderer Systemkomponenten abfragen, wobei das Verhalten des Automationssystems durch Orchestrierung der Services der Systemkomponenten mittels zumindest einer Orchestrierungs-Maschine gesteuert wird sowie auf eine Orchestrierungs-Maschine zur Orchestrierung von Services eines serviceorientierten Automationssystems, umfassend Systemkomponenten wie intelligente Mechatronik-Komponenten, Steuerungs-Komponenten und/oder Entscheidungs-Komponenten (DSC), von denen jedes einen Satz an Services bereitstellt, die dessen interne Funktionalitäten repräsentieren und von anderen Systemkomponenten abgefragt werden.

Ein Verfahren zur Orchestrierung eines serviceorientierten Automationssystem sowie eine Orchestrierungs-Maschine ist in einem Aufsatz von F. Jammes, H. Smith u. a.: "Orchestration of service-oriented manufacturing processes", IEEE 2005, Vol. 1, Seite 617 bis 624 beschrieben. Ein typisches Merkmal eines serviceorientierten Automationssystems ist, dass verschiedene Prozesse mit einer vorgegebenen Sequenz zusammengestellt und ausgeführt werden um einen komplexen Prozess höherer Ordnung zu bilden. Dieses Muster wird auf verschiedenen Level wiederholt, nämlich Komposition von Feldgeräten zur Bildung von Maschinen, Kompositionen von Maschinen zur Bildung von Arbeitszellen und Arbeitsstrassen, Komposition von Maschinen-Level-Prozessen zur Bildung von Fabrikationssystemen und Fabriken. So bald der Prozess als ein komplettes eco-System von Servicen zusammengestellt ist, ist es wünschenswert, dass die mit der Koordination atomarer den Prozessen zugeordneter Services verbundene Komplexität in einem einzelnen Service-Interface eingekapselt wird.

Die Praxis der sequenziellen und synchronisierten Ausführung von Services bezogen auf einen geschlossenen Wirtschafts- oder Fabrikationsprozess wird in der Fachsprache Orchestrierung genannt. Eine Orchestrierungs-Maschine implementiert die Anwendungs-Logik, die notwendig ist, um atomare Services zu orchestrieren und stellt ein High-Level-Interface für die zusammengesetzten Services (Prozesse) bereit.

Die Zusammensetzung und Orchestrierung von Web-Services gelangt in letzter Zeit zu besonderer Bedeutung. In diesem Zusammenhang wird das Ziel verfolgt komplexe Prozesse durch Zusammensetzungen von Web-Services zu bilden, die über mehrere Hierarchieebenen anwendbar sind.

Um Flexibilität bereit zu stellen ist es empfehlenswert, eine Web-Services Orchestrierungs-Beschreibung (modellbasierte Orchestrierung) zu verwenden, die die Arbeitsabläufe des modellierten Systems beschreibt. Diese Orchestrierungs-Beschreibungen können durch Maschinen in Echtzeit interpretiert werden, welche den Arbeitsablauf in Echtzeit interpretieren, um die Nutzung von "ad-hoc", "Hard-coded"-Implementierungen zu vermeiden.

Zur Zeit sind hauptsächlich zwei Spezifikationen zur Orchestrierungen von Web-Services bekannt, und zwar einerseits die "Business Process Management Language (BPML) " sowie die "Process Specification Language (PSL)", insbesondere für Darstellung von Fabrikationsprozessen.

In der Industrie wurde jedoch oft die "Business Process Execution Language for Web-Services (BPEL4WS)" angewendet, die ebenfalls unter dem Namen WS-BPEL oder BPEL bekannt ist.

Ein Nachteil der zur Zeit erhältlichen Orchestrierungs-Maschinen ist jedoch, dass diese für Enterprise-Level-Systeme ausgelegt sind. Diese Implementierungen laufen "on top" eines Anwendungsservers und belegen Speicherbereiche im Bereich von 10 MB. Für Service-Koordination auf Geräte-Level muss die Orchestrierungs-Maschine allerdings in einem eingebetteten Gerät mit begrenzten Ressourcen laufen.

Den Druckschriften A. Bepperling u. a. "A Frame Work for Development and Implementation of Web Service based on Intelligent Autonomous Mechatronik Components", Industrial Informatics, 2006, IEEE Int. Conf. on IEEE PL, 1. Aug. 2006, Seiten 341 - 347, beschreibt die Orchestrierung von Produktionsprozesse darstellenden Services ausgehend von einem Gesamtproduktionsprozess auf Geschäfts-Ebene.

Ein den Produktionsprozess beschreibendes Modell, insbesondere Petri-Netz-Modell wird auf die am Produktionsprozess beteiligten "building blocks" aufgeteilt und von diesen interpretiert. Eine Orchestration der die Produktionsschritte darstellenden Services ist bereits vor der Implementierung der Modelle erfolgt. Für eine Orchestrierung von Funktionalitäten der einzelnen System-Komponenten darstellender Services ist das beschriebene Verfahren nicht geeignet.

Die Druckschrift P. Leitao et al. "Petri-net based Methodology for the Development of Collaborative Production Systems", Emerging Technologies and Factory Automations, 2006, ETFA '06, 1. Sept. 2006, Seiten 819 - 826, beschreibt ein Verfahren zur Entwicklung von kollaborativen, (agenten-basierten) Produktionssystemen unter Verwendung von High-Level-Petri-Netzen. Das vorgeschlagene Verfahren unterstützt die Entwicklung von Lebenszyklen aus Spezifikationsanalysen bis zur Design-Validierung und Implementierung von kollaborativen und rekonfigurierbaren Produktionssystemen und deren Steuerungssysteme.

In der Druckschrift F. Jammes : "Service Oriented Device Communications using the Device Profile for Web-Services", Internet Citation, 2. Dezember 2005 wird die Adaption service-orientierter Architekturen auf dem Level der Kommunikation zwischen eingebetteten Geräten beschrieben, welche ihre Funktionalitäten anbieten. Die Verwendung von "Device Profile for Web-Services" für Architekturen von "intelligenten Geräten" ist ebenfalls beschrieben.

Der vorliegenden Erfindung liegt das Problem zugrunde, ein Verfahren zur Orchestrierung eines serviceorientierten Automationssystems sowie eine Orchestrierungs-Maschine in der Art weiterzubilden, dass diese kompakt ist und auf Geräte-Level ablaufbar ist.

Das Problem wird erfindungsgemäß unter anderem durch die Merkmale des Anspruchs 1 gelöst.

Serviceorientierte Automationssysteme beziehen sich auf verteilte und rekonfigurierbare Automationssysteme, deren Verhalten durch die Orchestrierung von Services reguliert wird, mit Systemkomponenten (wie z.B. Herstellungskomponenten, Intelligente Entscheidungsmechanismen und Steuergeräten), die Services anbieten, die ihre Automatisierungsfunktionalitäten als Service zur Verfügung stellen, und von anderen Komponenten abgefragt werden.

Die Orchestrierung von Services, auf Gerätelevel, erfolgt durch Recheneinheiten wie in Mikrokontroller integrierte Orchestrierungs-Maschinen, die eine Art von auf service-orientierte Systeme zugeschnittene High-Level-Petri-Netzen (HLPN) verwenden, die als HLPN-Interpreter fungieren oder als ein eingebautes auto-ablauffähiges HLPN-Steuermodul, zur Ausführung von HLPN-Modellen, die dessen Verhalten abbilden. Dazu ist vorzugsweise vorgesehen, dass die Orchestrierungs-Maschine in einer Recheneinheit wie Mikrocontroller einer Systemkomponente wie Mechatronik-Komponente und/oder Logik-Steuerungs-Komponente integriert wird und dass das HLPN-Modell des Automatisierungssystem durch die Orchestrierungs-Maschine interpretiert und auf gefilhrt wird.

Ferner zeichnet sich das Verfahren dadurch aus, dass die Orchestrierungs-Maschine in einer Recheneinheit einer Steuerungskomponente auf Geräteebene wie Gripper eines Roboters oder Teile eines Transportsystems, auf Maschinenebene wie Set von Geräten insbesondere ein Roboter oder komplette Transporteinrichtung und/oder auf Zellenebene wie Set von Maschinen, die ein komplettes Fertigungs- bzw. Montagesystem bilden, integriert wird und dass ein zuvor kompiliertes HLPN-Modell des Automationssystems in der Steuerungskomponente ausgeführt wird.

Vorzugsweise erfolgt die Beschreibung des Petri-Netzes über XML, das durch Steuermechanismen des Geräts interpretiert werden kann oder fremdgesteuert kompiliert und anschließend auf das Gerät geladen werden kann.

Im Anschluss an Interpretation oder Kompilation wird die Petri-Netz-Beschreibung in Datenstrukturen in Form von vorzugsweise Matrizen umgewandelt, die durch das Programm zur Steuerung des Services und I/O-Levels gehandhabt werden können.

Vorzugsweise beinhaltet die Beschreibung ebenfalls, welche Dienste bereit gestellt/abgefragt werden, gelesen/geschrieben an die I/Os und zuvor für das Petri-Netz getätigte Analyseinformation.

Die Erfindung bezieht sich ferner auf das Feld industrieller verteilter Steuerung und definiert eine Orchestrierungs-Maschine zur Orchestrierung von Services, auf Gerätelevel, in serviceorientiert-basierten Automationssystemen.

Die Orchestrierungs-Maschine verwendet eine Art von auf serviceorientierte Systeme zugeschnittene High-Level-Petri-Netzen (HLPN), wobei der Vorteil ihrer leistungsstarken mathematischen Basis zunutze gemacht wird, diskrete, dynamische, verteilte und ereignisorientierte Systeme zu repräsentieren, in welchen Gleichzeitigkeit und Parallelität, Synchronisation, Resource-Sharing, unsynchronisierter Austausch von Ereignissen und gegenseitige Inhibition entscheidend sind.

Die Orchestrierungs-Maschine ist auf Gerätelevel implementiert, insbesondere in eine Steuerung bzw. Recheneinheit einer Steuerung wie Mikrokontroller des Gerätes integriert. Die Orchestrierungs-Maschine ist modular aufgebaut und kann verschiedene Petri-Netz-Modelle ausführen und interpretieren, wobei das Verhalten des Geräts dargestellt wird. Für einfachere Geräte kann das High-Level-Petri-Net-Modell, aufgrund von Hardware-Beschränkungen vorzugsweise direkt in die Steuerung integriert sein. Die Orchestrierungs- Maschine kann als ein in einer Recheneinheit wie Mikrokontroller, PLC oder IPC einer Systemkomponente autoablauffähiges HLPN-Steuermodul zur Ausführung der HLPN-Modelle des Automationssystems ausgebildet sein. Ferner ist vorgesehen, dass ein Steuerungssystem eine Logik-Steuerungskomponente und/oder eine Entscheidungs-Komponente und/oder eine Mechatronik-Komponente umfasst, welche über ein Kommunikationsnetzwerk miteinander verbunden sind, wobei die Orchestrierungs-Maschine für die Koordination und Aggregation von Services der weiteren Komponenten in der Logik-Steuerungskomponente eingebettet ist und wobei der Orchestrierungs-Maschine das HLPN-Modell des Automationssystems bekannt ist.

Die Orchestrierungs-Maschine kann in einer Steuerung eines Gerätes, das heißt auf Geräte-Level implementiert sein, wenn dieses Gerät mehr als einen Service beinhaltet und die Services orchestriert werden müssen. Ferner ist Voraussetzung für die Implementierung, dass das Gerät eine entsprechende Infrastruktur, das heißt eine Datenverarbeitungseinheit wie Mikrokontroller enthält.

Vorzugsweise weist die Mechatronik-Komponente sowie die Logik-Steuerungs-Komponente jeweils eine Logik-Steuerung auf, welche als ein HLPN-Interpreter definiert ist, um Services auf Gerätelevel zu orchestrieren. Eine einfachere Komponente kann anstelle eines HLPN-Interpreters vorkompilierte HLPN-Netze umfassen.

Alternativ kann eine Orchestrierungs-Maschine auch in einer Steuerung einer Maschine, das heißt auf Maschinen-Level implementiert werden. Dabei umfasst die Maschine mehrere Geräte, die Funktionalitäten als Services anbieten, welche orchestriert werden müssen. Die Maschine selbst muss ebenfalls einer Hardware-Infrastruktur in Form einer Datenverarbeitungseinheit wie Mikrokontroller, PLC oder IPC enthalten.

Des Weiteren kann die Orchestrierungs-Maschine in einer Steuerung eines kompletten Fertigungs- und/oder Montagesystems implementiert sein. In diesem Fall besteht das System aus mehreren Maschinen, wobei Fertigungs- und/oder Montagefunktionen der Maschinen als Services angeboten werden, welche orchestriert werden müssen. Weitere Voraussetzung ist, dass das Fertigungs- und/oder Montagesystem Hardware-Infrastruktur in Form einer Recheneinheit wie Mikrokontroller, PLC oder IPC aufweist.

Wenn die Orchestrierungs-Maschine Services auf Maschine-Level orchestriert, könnte ein von dieser Orchestrierungs-Maschine orchestrierter Service die Orchestrierung von einer Untergruppe (Sub-Set) von Services einer Untergruppe (Sub-Set) von Geräten sein. Für die dann übergeordnete Orchestrierungs-Maschine gibt es nur einen Service zu orchestrieren, nämlich den Service, der von einer anderen Orchestrierungs-Maschine angeboten wird.

Die Erfindung unterscheidet sich gegenüber dem Stand der Technik durch die kennzeichnenden Merkmale des Anspruchs 1.

Je einfacher bzw. kleiner die die Rechenkapazität aufweisenden Automatisierungsgeräte sind, welche die Recheneinheiten aufweisen, desto einfacher kann die Orchestrierung auf Geräte-Level ausgeführt werden.

Weitere Einzelheiten, Vorteile und Merkmale der Erfindung ergeben sich nicht nur aus den Ansprüchen, den diesen zu entnehmenden Merkmalen für sich und/oder in Kombination -, sondern auch aus der nachfolgenden Beschreibung von der Zeichnung zu entnehmenden bevorzugten Ausführungsbeispielen.

Es zeigen:
- Fig. 1: ein Steuerungssystem für service-orientierte Automatisierungssysteme,
- Fig. 2: ein Begriffsmodell von Smart-Mechatronic-Komponenten und
- Fig. 3: ein HLPN-Modell eines Fördersystems mit zwei Arbeitsstationen.

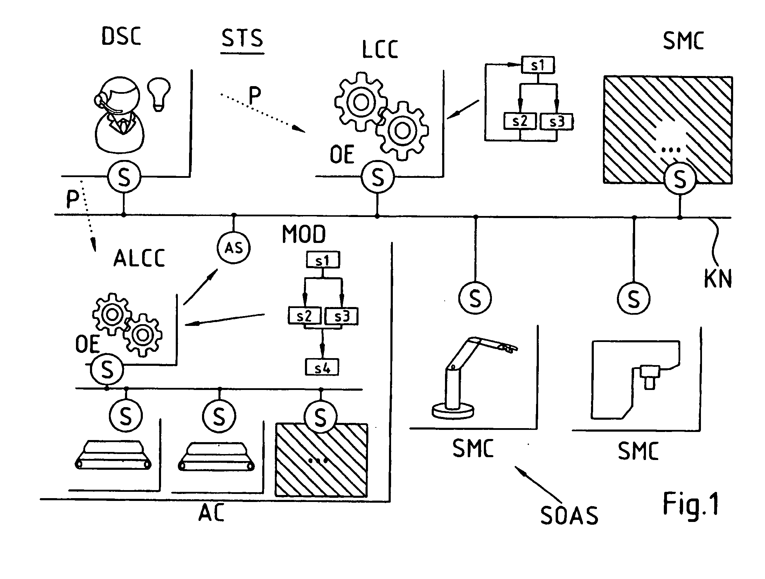

Fig. 1 zeigt ein Steuerungssystem 10 eines service-orientierten Automationssystems SOAS, umfassend intelligente Mechatronik-Komponenten SMC, zusammengesetzte Komponenten AC, Logik-Steuerungs-Komponenten LCC sowie Entscheidungs-Komponenten DSC, die über ein Kommunikations-Netzwerk KN miteinander verbunden sind und über dieses Netzwerk Services aufrufen oder zur Verfügung stellen.

Basis für den vorgeschlagenen Steuerungsansatz für das in Fig. 1 dargestellte service-orientierte Automationssystem SOAS ist der Aufbau eines rekonfigurierbaren Automationssystems, basierend auf modularen und einfachen mechatronischen Geräten SMC, von denen jedes einen Satz an Services S bereitstellt, die dessen interne Funktionalitäten repräsentiert. Sämtliche Interaktionsprozesse zwischen den Komponenten SMC, LCC und DSC erfolgen über den Zugriff auf Services S, die durch das Kommunikationsnetzwerk KN verbunden sind.

Die Steuerung des serviceorientierten Automationssystems SOAS ist hauptsächlich abhängig von der Koordination der verteilten mechatronischen Geräte SMC und anderer Komponenten in dem System. Im Fall der mechatronischen Geräte beinhaltet dies die Orchestrierung ihrer Services S als auch die Koordinierung/Synchronisation ihrer I/Os.

Die Steuerung selbst kann differenziert werden als eine lokale Steuerung LC durch die mechatronischen Komponenten SMC, die Logik-Steuerungs-Komponente LCC als kollaborative Steuerung zwischen Komponenten und eine zusammengefasste Steuerung ALCC unter Verwendung eines speziellen Steuerungs-Services AS, gewöhnlich zur Bildung von Services höherer Level basierend auf individuellen Services.

Das Steuerungssystem STS nach Fig. 1 zeigt hauptsächlich drei Arten von Komponenten, die an der Steuerung beteiligt sind. Die Logik-Steuerungs-Komponenten LCC bieten Koordinations-Steuerungs-Services, wenn das individuelle und koordinierte Verhalten ungenügend ist. Diese soll als Client funktionieren und in der Lage sein Services S zu benutzen, ohne Hypothesen, wie diese implementiert sind. Zudem ist diese auch noch ein Provider, da sie die Funktion ausführen kann, zusammengesetzte Services AS höheren Levels zu erzeugen, die aus individuellen bestehen.

Eine dazugehörige Orchestrierungs-Maschine OE, die die Koordination und Aggregation von Services S durchführt, sollte in den LCC eingebettet sein, wobei ihr das gesamte künstliche Modell MOD wie HLPN Modell des Produktionssystems bekannt ist.

Zusätzlich zu der statischen Steuerung LCC, die hauptsächlich einen speziellen logischen oder Verarbeitungsplan ausführt, kann die Flexibilität durch Entscheidungsmechanismen ausgedehnt werden. Die Entscheidung selbst kann örtlich durch die Komponente SMC, LCC erfolgen oder durch die Verwendung spezieller Entscheidungs-Komponenten DCS für komplexes globales Verhalten. Zu diesem Zweck prüft die Steuerung LCC die Entscheidungs-Findungs-Komponenten DSC, die spezielle Services S anbieten, um eine der mehreren Möglichkeiten zu wählen, wie dies durch die Pfeile P angedeutet ist. Auch können sie nicht erfasste Verfahren in unvorhergesehene Zustände forcieren. Ein LCC und ein DSC können als eine Komponente integriert werden, die einander ergänzen, und die über Austausch von Services zusammenarbeiten.

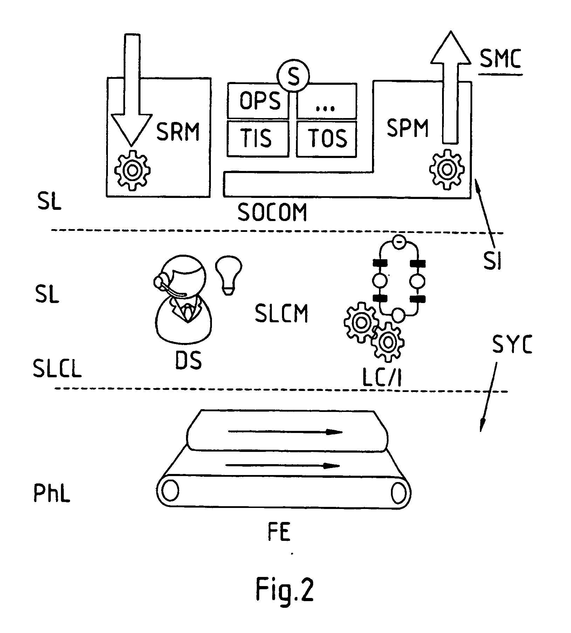

Die Mechatronik-Geräte SMC, auch als Smart-Mechatronik-Komponenten bezeichnet, steuern ihr eigenes Verhalten und können leicht kombiniert werden, um komplexere Geräte AC zu bilden, die, mit anderen Geräten kombiniert, das gewünschte Automatisierungssystem bilden. Die Mechatronik-Komponenten SMC repräsentieren die integrierte Kombination von Gerät, Steuerung und Kommunikation. Ein SMC wird in drei verschiedene Level strukturiert, wie in Fig. 2 dargestellt: ein physikalisches Level PHL, eine "Smart"-Logik-Steuerungs-Level SLCL und ein Service-Level SL. Das Herz des SMC ist das "Smart"-Logik-Steuerungs-Modul SLCM, das eine Logik-Steuerung LC und optional eine Entscheidungsfindung DS umfasst. Das "Smart"-Logik-Steuerungs-Modul SLCM steuert das interne Verhalten des physikalischen Geräts SMC und koordiniert die Kommunikation über Services S. In dem Logik-Steuerungs-Modul SLCM sind Service-Schnittstellen SI implementiert. Ferner werden I/O's des physikalischen Levels über eine Schnittstelle SYC synchronisiert. Services wie "ON-Position" OPS, "Transfer IN" TIS oder "Transfer OUT" TOS werden über eine Service-Anforderungs-Einheit SRM angefordert und über eine Service-Bereitstellungs-Einheit SPM angeboten. Eine Kommunikations-Modul SOCOM ist serviceorientiert ausgebildet.

Jede SMC muss Services S einkapseln, die das physikalische Gerät SMC oder die "Smart"-Logik-Steuerung bereitstellen kann. Da diese Komponenten die Konzepte der serviceorientierten Systeme umfassen, stellt eine technologische Lösung die Nutzung von Web-Services WS dar, um sie dialogfähig zu machen. Web-Services WS sind einfache, ökonomische, weitestgehend erhältliche Interaktionsmittel zwischen Informationssystemen. Andererseits werden elektronische Geräte in steigendem Maß mit Standardnetzwerken (Ethernet und TCP/IP sind vielerorts weitestgehend erhältlich) verbunden. Ein Geräteprofil DPWS für Web-Services WS definiert Erweiterungen, die benötigt werden, um Web-Services WS in elektronischen Geräten zu verwenden, wobei deren spezifische Randbedingungen berücksichtigt werden: Grundspezifikationen (Footprint), Bereitstellung und Erfüllung der gebräuchlichsten Erfordernisse (z.B. Sicherheit, sofortige Betriebsbereitschaft, asynchroner und ereignisorientierter Austausch).

Es besteht der Ansatz, die Logik-Steuerung LC von SMC und LCC als einen integrierten Interpreter I zu definieren, um Services S auf Gerätelevel zu instrumentieren, die eine Art von High-Level-Petri-Netzen HLPN handhaben, die auf serviceorientierte Systeme zugeschnitten sind. Einfachere Geräte können anstelle eines Interpreters I bereits vorkompillierte HLPN einschließen, da die Logik und Kommunikation selbst während der Laufzeit nicht geändert werden müssen.

Es ist wichtig darauf zu verweisen, dass andere Kontrollmechanismen parallel durch verschiedene Geräte benutzt werden können. Bedingung ist, dass die Kommunikation über Web-Services Kompatibilität sicherstellen soll und dass der verwendete Logik-Steuerungs-Mechanismen, im vorliegenden Fall Petri-Netze, Zugriff haben müssen auf das Service-Level DPWS, um die Einrichtungen zu nutzen und um fähig zu sein, mit anderen Komponenten in dem System zu kommunizieren.

Die HLPN-basierte Logik Steuerungs-Maschine bzw. Orchestrierungs-Maschine OE wird in Mikrokontrollergeräte eingebettet, wobei sie das logische Steuerungsverhalten des Automationsgeräts/-systems ausführt. Die Maschine OE kann in einen unabhängigen LCC integriert werden oder direkt in die SMeCs zum Kollaborationszweck. Die Maschine führt das logische Steuerungsverhalten der Komponente LCC bzw. SMC aus, dargestellt durch HLPN-Modelle, wobei die Ausführung der Services S koordiniert wird (und/oder I/Os gemäß dem Granularitätslevel), der durch die Komponente zur Verfürung gestellt wird.

Der Ansatz verwendet HLPN als Beschreibung von Steuerungslogik aus mehreren Gründen:
- Vorteil ihrer leistungsstarken mathematischen Basis, diskrete, dynamische, verteilte und ereignisorientierte System zu repräsentieren, in welchen Nebenläufigkeit und Parallelität, Synchronisation, Ressourcen-Sharing, unsynchronisierter Austausch von Ereignissen und gegenseitige Ausschließung wesentlich sind;
- Anlagenkomplex in grafischer Modellierung und Verständnis;
- Leistungsstarker und effektiver Steuerungsmechanismus, da HLPN intern als ein Set von Matrizen dargestellt und manipuliert werden;
- Fähigkeit zur Adaption von Schnittstellen an I/Os und Services über die Beschreibung von Übergängen;
- Ansteuern und synchronisieren des Laufzeitverhaltens von Komponenten;
- Aufdeckung von Konflikten, die einer Entscheidung bedürfen;
- Validation, Analyse und Simulation in der Entwurfsphase, wobei die Ergebnisse dieser Phase für die Unterstützung der Entscheidungsmechanismen genutzt werden können;
- Modulare Darstellung, Konnektivität und Aggregation von Sub-Modellen;
- Transparenz (Module können in verschiedenen Methodiken programmiert werden, da Interaktionsmuster definiert werden und gegenseitig einen Standard "Pattern" bilden).

### Anwendungsbeispiele:

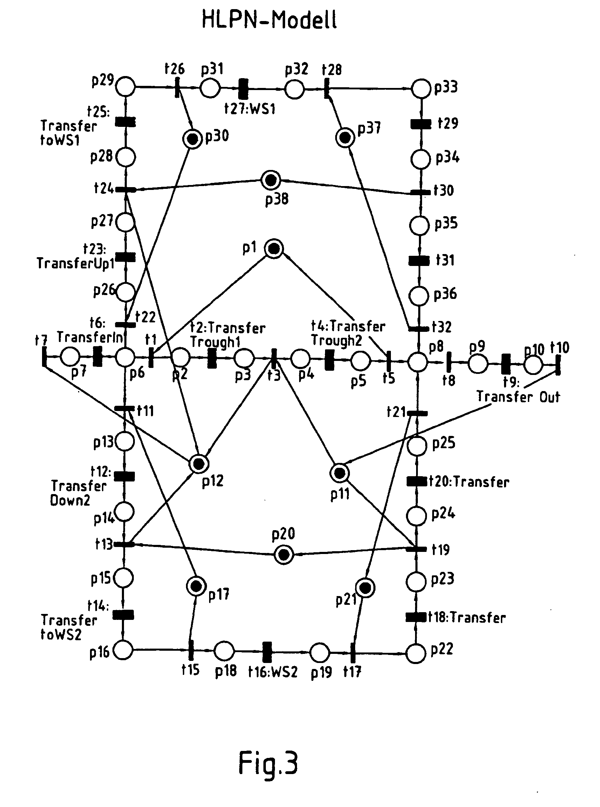

Entwicklung eines Steuerungsmoduls für ein Förderautomationsgerät unter Bezugnahme auf Fig. 2 und Fig. 3

In Betracht gezogen wird das Beispiel einer Fördereinheit FE mit "Transfer In"- und "Transfer Out"-Services TIS, TOS, zur Verbindung mit anderen Förderern (oder Transportsystemen) und einen "On-Position"-Service OPS zur Anzeige, dass ein Produkt (wie Palette) am Platz ist, um von einer Maschine oder Bediener benutzt zu werden. Die besagten Services werden durch das SMC zur Verfugung gestellt und können durch andere Komponenten verwendet werden, jedoch können bei Bedarf auch externe Sei-vices hinzugezogen werden, z. B. muss zur Verbindung mit anderen Förderern der "Transfer Out"-Service des anderen Förderers abgefragt werden.

In einer Anfangsphase wird das HLPN-Modell, das das Verhalten des Automationsgeräts darstellt, editiert, analysiert und simuliert, wobei ein geeignetes High-Level-Petri-Netz-Tool verwendet wird. Wie zuvor ausgeführt können die automatischen Services über eine High-Level-Petri-Netzsteuermaschine OE laufen, jedoch können auch andere Formen von Steuermechanismen zum Einsatz gelangen. Es hängt vom Entwickler oder Ingenieur ab, jedwede verfügbare Steuermaschine zu benutzen, sofern diese die Schnittstelle SI zu dem Service-Level SL aufweist und somit Kompatibilität zulässt.

Sodann wird das HLPN-Modell auf den Mikrokontroller MC heruntergeladen, welches sodann interpretiert wird und durch die HLPN-Maschine OE ausgeführt wird, die bereits in dem Mikrokontrollergerät eingebettet ist. Die Ausführung des HLPN-Modells durch die Maschine OE wird die Services gemäß dem speziellen Verhalten orchestrieren, wobei durch die Komponenten SMC zur Verfügung gestellte Service S aufgerufen werden. Die Re-Konfigurierbarkeit des Systems ist einfach und schnell und ist nur notwendig, um das HLPN-Modul zu ändern, das das neue Verhalten des Automationsgeräts oder -systems darstellt.

## Patentansprüche

1. Verfahren zur Orchestrierung von Services (S) eines serviceorientierten Automationssystems (SOAS), wobei Systemkomponenten (SMC, LCC) deren Funktionalität darstellende Services (S, WS) anbieten und Services (S) anderer Systemkomponenten (SMC, LCC) abfragen, wobei das Verhalten des Automationssystems (SOAS) durch Orchestrierung der Services (S) der Systemkomponenten (SMC, LCC) mittels einer Orchestrierungs-Maschine (OE) gesteuert wird,
**dadurch gekennzeichnet,**
**dass** die Orchestrierungs-Maschine (OE) modular aufgebaut und jeweils in mehreren Systemkomponenten (SMC, LCC) als High-Level-Petri-Netz-Interpreter oder als autoablauffähiges High-Level-Petri-Netz-Steuermodul implementiert ist und auf serviceorientierte Systeme zugeschnittene High-Level-Petri-Netze verwendet, wobei die Orchestrierung der Services (S) auf Gerätelevel durch Koordination und Aggregation von Services (S) der weiteren Systemkomponenten (SMC, LCC) durch die High-Level-Petri-Netz-Interpreter oder die ablauffähigen High-Level-Petri-Netz-Steuermodule durch Interpretation und Ausführung von verschiedenen, das Verhalten der Systemkomponenten (SMC, LCC) darstellenden High-Level-Petri-Netz-Modelle erfolgt.

2. Verfahren nach Anspruch 1,
**dadurch gekennzeichnet,**
**dass** das High-Level-Petri-Netz-Modell des Automationssystems (SOAS) und/oder der Steuerungskomponente (SMC, LCC) fremdgesteuert kompiliert und anschließend in die Orchestrierungs-Maschine (OE) der Steuerungskomponente ie-(SMC, LCC) geladen und durch das implementierte High-Level-Petri-Netz-Steuermodul ausgeführt wird.

3. Verfahren nach zumindest einem der obigen Ansprüche 1 bis 2,
**dadurch gekennzeichnet,**
**dass** das High-Level-Petri-Netz über die Auszeichnungssprache XML ("Extensible Markup Language") beschrieben wird.

4. Verfahren nach zumindest einem der obigen Ansprüche 1 bis 3,
**dadurch gekennzeichnet,**
**dass** im Anschluss an die Interpretation oder die Kompilation die High-Level-Petri-Netz-Beschreibung in Form von Datenstrukturen in Matrizen umgewandelt wird.

## Claims

1. Method for orchestration of services (S) of a service-oriented automation system (SOAS), with system components (SMC, LCC) offering services (S, WS) representing their functionality and querying services (S) of other system components (SMC, LCC), with the behavior of the automation system (SOAS) being controlled through orchestration of the services (S) of the system components (SMC, LCC) by means of an orchestration machine (OE),
**characterized in**
**that** the orchestration machine (OE) has a modular structure and is implemented in each of several system components (SMC, LCC) as High-Level-Petri-Net interpreter or as auto-run-capable High-Level-Petri-Net control module and uses High-Level-Petri-Nets tailored to service-oriented systems, the orchestration of the services (S) happening at device level by coordination and aggregation of services (S) of the further system components (SMC, LCC) by the High-Level-Petri-Net interpreters or the auto-run-capable High-Level-Petri-Net control modules by interpretation and execution of various High-Level-Petri-Net model representing the behavior or the system components (SMC, LCC).

2. Method according to claim 1,
**characterized in**
**that** the High-Level-Petri-Net model of the automation system (SOAS) and/or of the control component (SMC/ LCC) is compiled by out-of-system controls and then is loaded into the orchestration machine (OE) of the control component (SMC, LCC) and is executed by the implemented High-Level-Petri-Net control module.

3. Method according to at least one of the above claims 1 to 2,
**characterized in**
**that** the High-Level-Petri-Net is described via the markup language XML ("Extensible Markup Language").

4. Method according to at least one of the above claims 1 to 3,
**characterized in**
**that** subsequent to the interpretation or the compilation, the High-Level-Petri-Net description in the form of data structures is converted into matrices.

## Revendications

1. Procédé d'orchestration de services (S) d'un système d'automatisation orienté service (SOAS), les composants système (SMC, LCC) proposant des services (S, WS) représentant leur fonctionnalité et consultant des services (S) d'autres composants système (SMC, LCC), le comportement du système d'automatisation (SOAS) étant géré par l'orchestration des services (S) des composants système (SMC, LCC) au moyen d'une machine d'orchestration (OE),
**caractérisé en ce**
**que** la machine d'orchestration (OE) est de conception modulaire et respectivement implémentée dans plusieurs composants système (SMC, LCC) en tant qu'interprète de réseaux de Petri de haut niveau ou en tant que module de gestion autoexécutable de réseaux de Petri de haut niveau et utilise des réseaux de Petri de haut niveau conçus pour des systèmes orientés service, sachant que l'orchestration des services (S) au niveau des appareils se fait par coordination et agrégation de services (S) des autres composants système (SMC, LCC) au moyen de l'interprète de réseaux de Petri de haut niveau ou du module de gestion autoexécutable de réseaux de Petri de haut niveau par interprétation et exécution de différents modèles de réseaux de Petri de haut niveau représentant le comportement des composants système (SMC, LCC).

2. Procédé selon la revendication 1,
**caractérisé en ce**
**que** le modèle de réseau de Petri de haut niveau du système d'automatisation (SOAS) et/ou des composants de gestion (SMC, LCC) est compilé sous gestion externe, puis chargé dans la machine d'orchestration (OE) des composants de gestion (SMC, LCC) et exécuté par le module de gestion implémenté de réseaux de Petri de haut niveau.

3. Procédé selon au moins une des revendication 1 à 2 précédentes,
**caractérisé en ce**
**que** le réseau de Petri de haut niveau est écrit dans le langage de balisage XML (« Extensible Markup Language » - langage de balisage extensible).

4. Procédé selon au moins une des revendication 1 à 3 précédentes,
**caractérisé en ce**
**qu'**après l'interprétation ou la compilation, la description du réseau de Petri de haut niveau sous forme de structures de données est transformée en matrices.
